## Europäisches Patentamt

## European Patent Office

## Office européen des brevets

(11) Veröffentlichungsnummer: **0 218 274**

**B1**

(12) **EUROPÄISCHE PATENTSCHRIFT**

(45) Veröffentlichungstag der Patentschrift:
23.11.88

(21) Anmeldenummer: **86201472.7**

(22) Anmeldetag: **27.08.86**

(51) Int. Cl.⁴: **F 16 F 9/36,** F 16 C 33/20, F 16 J 9/14

(54) **Kolbenring für den Kolben von Dämpfungselementen.**

(30) Priorität: **13.09.85 DE 3532706**

(43) Veröffentlichungstag der Anmeldung:
**15.04.87 Patentblatt 87/16**

(45) Bekanntmachung des Hinweises auf die Patenterteilung:
**23.11.88 Patentblatt 88/47**

(84) Benannte Vertragsstaaten:
**AT DE FR GB IT NL**

(56) Entgegenhaltungen:
EP-A-0 163 937
EP-A-0 168 866
DE-A-1 629 774
DE-A-3 511 125
US-A-3 238 601

MACHINE DESIGN, Band 56, Nr. 7, April 1984, Seite 44, Cleveland, Ohio, US; "Three-layer sleeves seal racing shocks"
Werbeschrift der Kolbenschmidt AG: "Permaglide - Gleitlager", Neckarsulm, 1983, Seite 44

(73) Patentinhaber: **KOLBENSCHMIDT Aktiengesellschaft, Karl- Schmidt- Strasse 8/12 Postfach 1351, D-7107 Neckarsulm (DE)**

(72) Erfinder: **Bickle, Wolfgang, Friedenstrasse 15, D-6831 Reilingen (DE)**
Erfinder: **Müller, Manfred, Lerchenstrasse 43, D-7107 Untereisesheim (DE)**
Erfinder: **Köble, Roland, Drosselweg 2, D-6921 Ittlingen (DE)**

(74) Vertreter: **Rieger, Harald, Dr., Reuterweg 14, D-6000 Frankfurt am Main (DE)**

## Beschreibung

Die Erfindung betrifft einen Kolbenring für den Kolben von Dämpferelementen, wie Stoßdämpfern, Federbeinen, Niveaureglern, bestehend aus einem Stahlrücken und einer darauf porös aufgesinterten bzw. aufgespritzten 0,2 bis 0,35 mm dicken Schicht aus Zinn- oder Zinnbleibronze, auf der sich eine 0,01 bis 0,2 mm dicke Gleitschicht aus fluorhaltigem Polymerem, wie Polytetrafluoräthylen (PTFE), Polyvinylidenfluorid (PVDF) oder eine Mischung derselben, mit 10 bis 50 Gew.-% Bleipulver mit einer Korngröße von $\leqslant$ 35 µm befindet, mit dem auch die Poren der Bronzeschicht ausgefüllt sind, und das gegebenenfalls noch das Gleiten verbessernde bzw. den Verschleiß mindernde Zusätze, wie Graphitpulver, Molybdändisulfid, Zinksulfid, Bariumsulfat, Bleiborosilikat, Glasfasern und Kohlefasern, in einer Menge von 5 bis 50 Gew.-% einzeln oder zu mehreren enthalten kann.

Dämpferelemente sind beispielsweise zwischen Fahrzeugaufbau und Radaufhängung angebrachte Vorrichtungen, die zur Federung, Radführung, Stoß- und Schwingungsdämpfung dienen und somit wesentlich zur Fahrsicherheit und zur Verbesserung des Fahrkomforts beitragen.

Ein Dämpferelement kann aus zwei ineinandergeschobenen Rohren bestehen, an deren äußerem die Kolbenstange, deren Kolben sich in der mit Öl gefüllten Innenkammer des inneren Rohrs bewegt, befestigt ist. Im Kolben befinden sich Ventile, die wechselweise nur nach einer Seite Öl durchlassen. Sie stellen die Dämpfung bewirkende Drosselventile dar. Der auf dem Kolbenmantel in eine entsprechend gestaltete Ausnehmung aufgespannte Kolbenring mit einer Wanddicke von 0,4 bis 0,6 mm, die der Führung im Innenrohr und der Abdichtung des Druckraums gegenüber dem Arbeitsraum dient, besteht aus einer PTFE-Folie mit einem Stützkörper aus Metallgewebe oder aus einem PTFE-Band jeweils mit pfeilförmig oder stufenförmig ausgebildeter Stoßfuge. Beide Arten von Kolbenringen genügen nicht mehr den bei modernen Kraftfahrzeugen an den Stoßdämpfern auftretenden Seitenlasten, unter deren Einwirkung derartige Kolbenringe deformiert und dann aus der Ausnehmung am Kolben herausgedrückt werden. Hinzu kommt, daß Kolbenringe aus PTFE-Folie bzw. PTFE-Band nur mit einem unverhältnismäßig hohen Aufwand montiert werden können, weil diese Gleitelemente zunächst als Platine oder Bandabschnitt vorliegen und erst bei der Montage zu Kolbenringen umgeformt werden können. Diese Nachteile können durch die in der Werbeschrift der Kolbenschmidt AG: "Permaglide-Gleitlager", Neckarsulm 1983, auf Seite 44 beschriebenen Führungsbuchsen für Teleskopstoßdämpfer behoben werden, die aus einem Stahlrücken, einer Bronzeschicht und einer Gleitschicht bestehen, wobei im einzelnen auf den Stahlrücken eine 0,2 bis 0,35 mm dicke poröse Bronzeschicht aufgesintert ist, auf der sich eine 0,01 bis 0,2 mm dicke Gleitschicht aus einer PTFE-Blei-Mischung, PVDF-Blei-Mischung oder PVDF-PTFE-Blei-Mischung, mit der auch die Poren der Bronzeschicht gefüllt sind, befindet. Diese Führungsbuchse besitzt eine hohe Druckfestigkeit und Belastbarkeit. Es ist jedoch von Nachteil, daß die bei dieser Führungsbuchse angewendeten vorstehend genannten Formen der Stoßfuge keine sichere Abdichtung des Druckraumes gegenüber dem Arbeitsraum des Dämpferelements gewährleisten.

Es ist daher die Aufgabe der vorliegenden Erfindung, einen Kolbenring für Kolben von Dämpferelementen zu schaffen, der nicht nur den Kolben exakt im Innenrohr führt und vergleichsweise hoch belastbar ist, sondern auch den Arbeitsraum gegen den Druckraum sicher abdichtet, eine niedrige Reibung aufweist, einen geringen Verschleiß besitzt und montagefreundlich ist.

Gelöst ist diese Aufgabe dadurch, daß bei dem Kolbenring der eingangs beschriebenen Gestalt die eine Stirnfläche am Stoß einen Zapfen und die andere Stirnfläche am Stoß eine mit dem Zapfen in Größe und Gestalt korrespondierende Ausnehmung aufweisen. Der Zapfen greift spielfrei in die Ausnehmung ein und dichtet so den Arbeitsraum gegen den Druckraum vollständig und sicher ab.

In der DE-A-1 629 774 ist zwar eine Lagerbuchse beschrieben, deren Gleitschicht aus einem faserförmigen, einen niedrigen Reibungskoeffizienten aufweisenden Kunststoff besteht und mittels einer aus einem ausgehärteten Kunststoff gebildeten Zwischenschicht mit einem Metallstreifen verbunden ist. An der einen Stirnfläche befindet sich ein Zapfen, während an der anderen Stirnfläche eine entsprechende Ausnehmung vorgesehen ist. Von einer Verbesserung der Abdichtung in der Stoßfuge ist jedoch kein Hinweis in dieser Druckschrift enthalten.

Eine vorzugsweise Ausführungsform der erfindungsgemäß gestalteten Stirnflächen am Stoß ist darin zu sehen, daß die Länge des Zapfens 2 bis 15 mm und seine Breite 2,5 bis 15 mm betragen, wobei der Kopf des Zapfens zweckmäßigerweise halbrund ausgebildet ist.

Im Rahmen der Ausgestaltung der Erfindung weist jede Stirnfläche am Stoß jeweils einen Zapfen und eine Ausnehmung auf.

Die Erfindung ist in den Zeichnungen beispielhaft dargestellt. Es zeigen:

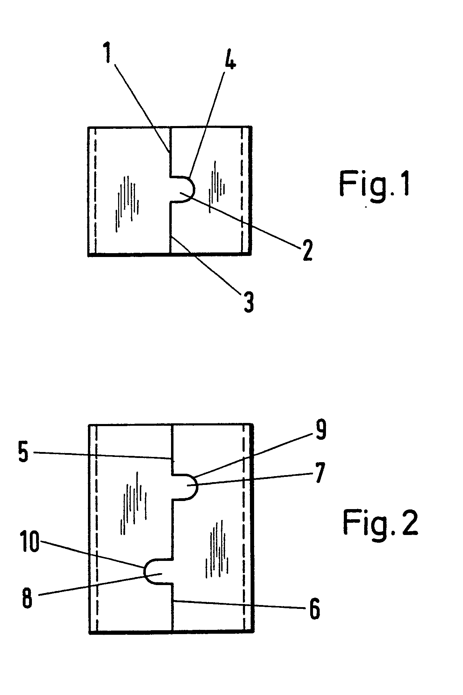

Fig. 1 eine Seitenansicht eines Kolbenrings, bei dem die eine Stirnfläche (1) am Stoß einen am Kopf halbrund gestalteten Zapfen (2) von 9 mm Länge und 6 mm Breite aufweist, der in eine an der anderen Stirnfläche (3) am Stoß angebrachte Ausnehmung (4) gleicher Größe und Gestalt spielfrei hineinragt.

Fig. 2 eine Seitenansicht eines Kolbenrings, bei dem jede Stirnfläche (5, 6) am Stoß einen am Kopf halbrund gestalteten Zapfen (7, 8) besitzt, der jeweils in eine korrespondierende Ausnehmung (9, 10) entsprechender Größe und Gestalt der jeweils gegenüberliegenden Stirnfläche am Stoß hineinragt.

## Patentansprüche

1. Kolbenring für den Kolben von Dämpferelementen, wie Stoßdämpfern, Federbeinen, Niveaureglern, bestehend aus einem Stahlrücken und einer darauf porös aufgesinterten bzw. aufgespritzten 0,2 bis 0,35 mm dicken Schicht aus Zinn- oder Zinnbleibronze, auf der sich eine 0,01 bis 0,2 mm dicke Gleitschicht aus fluorhaltigem Polymerem, wie Polytetrafluoräthylen (PTFE), Polyvinylidenfluorid (PVDF) oder eine Mischung derselben, mit 10 bis 50 Gew.-% Bleipulver mit einer Korngröße von $\leqslant$ 35 µm befindet, mit dem auch die Poren der Bronzeschicht ausgefüllt sind, und das gegebenenfalls noch das Gleiten verbessernde bzw. den Verschleiß mindernde Zusätze, wie Graphitpulver, Molybdändisulfid, Zinksulfid, Bariumsulfat, Bleiborosilikat, Glasfasern und Kohlefasern, in einer Menge von 5 bis 50 Gew.-% einzeln oder zu mehreren enthalten kann, dadurch gekennzeichnet, daß die eine Stirnfläche (1, 5, 6) am Stoß einen Zapfen (2, 7, 8) und die andere Stirnfläche (3, 5, 6) am Stoß eine mit dem Zapfen in Größe und Gestalt korrespondierende Ausnehmung (4, 9, 10) aufweisen, der Zapfen spielfrei in die Ausnehmung eingreift und den Arbeitsraum gegen den Druckraum vollständig abdichtet.

2. Kolbenring nach Anspruch 1, dadurch gekennzeichnet, daß der Zapfen (2, 7, 8) eine Länge von 2 bis 15 mm und eine Breite von 2,5 bis 15 mm besitzt.

3. Kolbenring nach den Ansprüchen 1 und 2, dadurch gekennzeichnet, daß der Zapfenkopf halbrund ausgebildet ist.

4. Kolbenring nach den Ansprüchen 1 und 3, dadurch gekennzeichnet, daß jede Stirnfläche (5, 6) am Stoß einen Zapfen (7, 8) und eine Ausnehmung (9, 10) besitzt.

## Claims

1. Piston ring for the pistons of damper units, such as shock absorbers, shock struts or level controllers, consisting of a steel backing and a porous layer of tin or tin-lead bronze 0.2 to 0.35 mm thick which is sinter-bonded or sprayed thereon, whereon there is a bearing layer 0.01 to 0.2 mm thick of fluorine-containing polymer, such as polytetrafluoroethylene (PTFE), polyvinylidene fluoride (PVDF) or a mixture thereof, with 10 to 50 % weight lead powder with a grain size of $\leqslant$ 35 µm, with which the pores of the bronze layer are also filled, and which may also optionally contain, individually or in combination, additives for improving the sliding properties or for reducing wear, such as graphite powder, molybdenum disulphide, zinc sulphide, barium sulphate, lead borosilicate, glass fibres and carbon fibres, in a quantity of 5 to 50 % weight, characterised in that one front face (1, 5, 6) has a projection (2, 7, 8) at the joint surface and the other front face (3, 5, 6) has a recess (4, 9, 10) at the joint surface which corresponds to the projection in size and shape, the projection engages in the recess without play and completely seals off the operating chamber from the pressure chamber.

2. Piston ring according to claim 1, characterised in that the projection (2, 7, 8) has a length of 2 to 15 mm and a width of 2.5 to 15 mm.

3. Piston ring according to claims 1 and 2, characterised in that the projection head is semicircular in form.

4. Piston ring according to claims 1 and 3, characterised in that each front face (5, 6) has a projection (7, 8) and a recess (9, 10) at the joint surface.

## Revendications

1. Segment de piston pour le piston d'éléments amortisseurs comme des amortisseurs de chocs, des jambes de suspension, des correcteurs d'assiette, constitué d'une partie dorsale en acier et d'une couche en bronze d'étain ou en bronze d'étain et de plomb, de 0,2 à 0,35 mm d'épaisseur, qui y est appliquée par frittage ou par pulvérisation de manière qu'elle soit poreuse et sur laquelle se trouve une couche de glissement de 0,01 à 0,2 mm d'épaisseur en polymère fluoré, comme en polytétrafluoroéthylène (PTFE), en poly(fluorure de vinylène) (PVDF) ou en un mélange de ceux-ci, avec 10 à 50 % en poids de poudre de plomb d'une granulométrie $\leqslant$ 35 µm, qui emplit également les pores de la couche de bronze et qui peut contenir également un ou plusieurs additifs améliorant le glissement et diminuant l'usure, comme de la poudre de graphite, du disulfure de molybdène, du sulfure de zinc, du sulfate de baryum, du borosilicate de plomb, des fibres de verre et des fibres de carbone, en une quantité de 5 à 50 % en poids, caractérisé en ce que l'une des surfaces frontales (1, 5, 6) de la fente comporte un tenon (2, 7, 8) et l'autre surface frontale (3, 5, 6) de la fente comporte une mortaise (4, 9, 10) correspondant en forme et dimension au tenon, le tenon pénétrant sans jeu dans la mortaise et rendant complètement étanche la chambre de travail vis-à-vis de la chambre sous pression.

2. Segment de piston suivant la revendication 1, caractérisé en ce que le tenon (2, 7, 8) a une longueur de 2 à 15 mm et une largeur de 2,5 à 15 mm.

3. Segment de piston suivant la revendication 1 ou 2, caractérisé en ce que la tête du tenon est hémicirculaire.

4. Segment de piston suivant la revendication 1 ou 3, caractérisé en ce que chaque surface frontale (5, 6) de la fente a un tenon (7, 8) et une mortaise (9, 10).

Fig.1

Fig.2